# EUROPEAN PATENT SPECIFICATION

(11) **EP 0 800 616 B1**
(45) Date of publication and mention of the grant of the patent: **01.12.2004**
(21) Application number: 96933828.4
(22) Date of filing: 20.09.1996
(51) Int. Cl.: F01D 15/10, H02P 9/48, H02K 47/26, H01F 38/18

(54) **ASYNCHRONOUS CONVERSION METHOD AND APPARATUS FOR USE WITH VARIABLE SPEED TURBINE HYDROELECTRIC GENERATION**
METHODE UND EINRICHTUNG ZUR ASYNCHRONENENERGIEUMSETZUNG MIT HILFE VON WASSERTURBINEN MIT WECHSELNDER GESCHWINDIGKEIT
PROCEDE ET DISPOSITIF DE CONVERSION ASYNCHRONE DESTINES A LA PRODUCTION D'HYDRO-ELECTRICITE PAR TURBINE A REGIME VARIABLE

(30) Priority: 31.10.1995 US 550940
(43) Date of publication of application: 15.10.1997
(73) Proprietor: GENERAL ELECTRIC COMPANY, Fairfield, CT 06431 (US)
(72) Inventor: RUNKLE, Mark, Andrew, Schenectady, NY 12309 (US); McLAREN, Donald, Gordon, Peterborough, Ontario K9K 1Y3 (CA); ARDLEY, Glenn, Henry, Peterborough, Ontario K9J 7J7 (CA); LARSEN, Einar, Vaugh, Charlton, NY 12019 (US); WEEBER, Konrad, Ennismore, Ontario K0L 1T0 (CA)
(74) Representative: Goode, Ian Roy
(86) International application number: PCT/US1996/015057
(87) International publication number: WO 1997/016627

(56) References cited:
- EP-A- 0 739 087
- DE-A- 3 443 428
- GB-A- 2 055 515
- US-A- 4 625 125
- US-A- 4 694 189
- US-A- 4 754 156
- US-A- 4 794 544
- US-A- 4 816 696
- US-A- 4 823 018
- US-A- 4 920 277
- US-A- 4 994 684

## Description

### 1. Field of Invention

This invention pertains to hydroelectric power generation, and particularly to method and apparatus for improving performance of a hydroelectric power generation system.

### 2. Related Art and Other Considerations

In the generation of electrical power using hydro-turbines, hydro-turbine units are enclosed in a dam, with water (e..g, river or lake) flow through the dam being used to drive (e.g., rotate) the hydro-turbine unit. So driven, the hydro-turbine unit has a shaft speed which is proportional to the frequency of the electrical power output produced by the hydro-turbine unit. Typically the hydro-turbine unit is a synchronous machine, meaning that the average speed of normal operation of the hydro-turbine unit is exactly proportional to the frequency of the electrical utilization system to which it is connected.

The generation of electrical power using hydro-turbines presents complex technical and environmental issues. For example, if a hydro-turbine unit is operated at a constant speed, several problems may manifest. For example, the turbine may cavitate at high and low loads (e.g.. high and low water flow rates). Additionally, pressure variations created by turbine buckets of a hydro-turbine unit may harm fish passing through the turbine. Moreover, hydro-turbine units operated at constant speed have numerous limitations, including restricted ability to affect power system frequency, slow active power adjustment, lower than optimum turbine efficiency, and a restricted active power operating range (which subsequently restricts the power system, water head and flow ranges).

Since the hydro-turbine unit is a synchronous machine, slowing down the shaft speed of the turbine also reduces the synchronous frequency of the output. A reduction in synchronous frequency of the hydro-turbine unit output is unacceptable when the hydro-turbine unit output is directly coupled to a user power grid.

Various efforts have been underway to achieve a variable speed hydro turbine. According to one effort, documented by Goto et al., "Power System Stabilizing Control By Adjustable Speed Pumped Storage Power Station Using Stabilizing Signals", CIGRE Symposium Tokyo 1395, the main hydro generator is modified to apply a variable-frequency current to the field winding via a cycloconverter-type of excitation system.

United States Patent 4,743,827 to Shiozaki et al. discloses a variable speed hydro turbine wherein control is accomplished using power and speed measurements of the main hydro generator in a closed loop configuration. Closed loop operation presents e.g., dynamic stability concerns (at least in a short time frame after a request for power change).

A method of transmitting electrical power from a hydro-turbine unit to an electrical utilisation system according to the preamble of claim 1 is disclosed in US-A-4,694,189. A rotary converter to perform a frequency conversion between the electrical output of a synchronous type machine and the frequency of an electrical utilisation system is disclosed in DE-A-3 443 428.

What is needed, therefore, is a variable speed hydro turbine system which is efficient and stable.

### SUMMARY

According to the present invention, there is provided a method of transmitting electrical power from a hydro turbine unit to an electrical utilisation system in accordance with claim 1.

In one embodiment, the controller uses a signal indicative of water head (hₘₑₐₛ) to control a speed of the rotary converter (and consequentially the hydro-turbine unit) and gate position of the hydro-turbine unit for yielding the requested converter output power level to the utilization system.

In another embodiment, the controller also includes a real-time automatic governor which uses a signal indicative of ac transmission frequency to the electrical utilization system to control the output electrical power level of the rotary converter.

Controlling the speed of the variable speed hydro-turbine unit involves using the signal indicative of water head to access an updatable memory wherein Hydraulic Hill Chart information is stored. To this end, in one embodiment a Hill Chart updater is provided.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1A is a schematic view of a hydraulic turbine/generator system according to a first embodiment of the invention.
Fig. 1B is a schematic view of a hydraulic turbine/generator system according to a second embodiment of the invention.
Fig. 1C is a schematic view of a hydraulic turbine/generator system according to a third embodiment of the invention.
Fig. 2 is a schematic view of an asynchronous converter according to an embodiment of the invention.
Fig. 4 is a Hill Chart utilised to explain principles of operation of the hydraulic turbine/generator system of the invention.
Fig. 5 is a schematic diagram of functions performed by a predictive controller included in a control system of the hydraulic turbine/generator system of the invention.
Fig. 6A and Fig. 6B are graphs reflecting tables stored in the predictive controller which are used for generating output signal ωₒ and a gate position or gate order command.

### DETAILED DESCRIPTION OF THE DRAWINGS

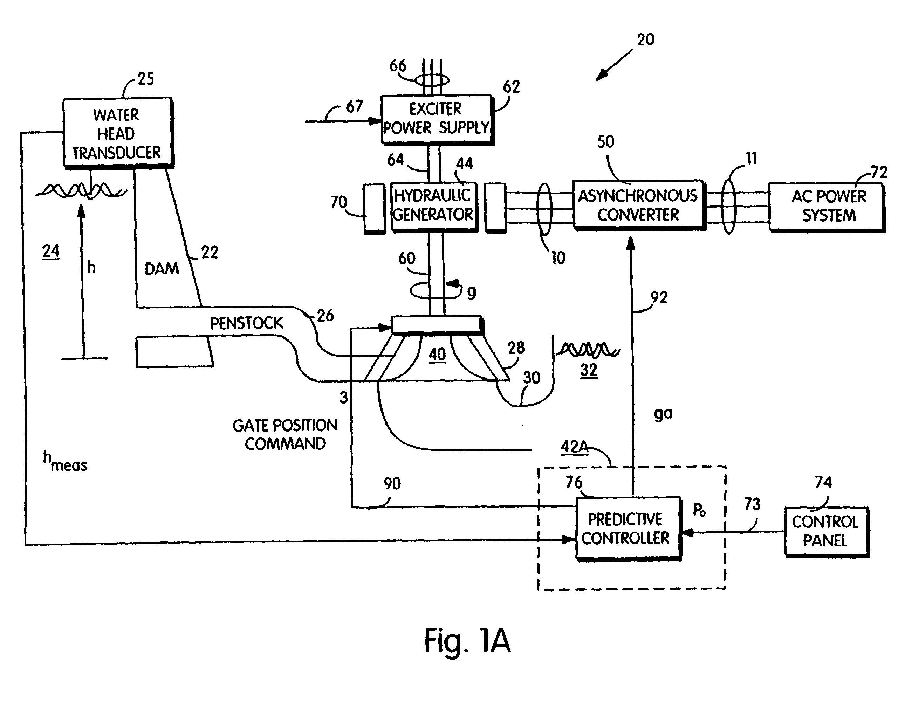

Fig. 1A shows a hydraulic turbine/generator system 20 according to a first embodiment of the invention. System 20 is situated at a dam 22 which dams up water of a body of head water 24. Head water transducers 25 are mounted on or proximate dam 22 for ascertaining a height "h" of head water 24. In conventional manner, dam 22 has a penstock 26 through which water (from the body of head water 24) is channeled to turbine chamber 28. Draught tube 30 connects an outlet of turbine chamber 28 to a body of tail water 32.

System 20 includes turbine 40; control system 42A: hydraulic generatcr 44; and, asynchronous converter 50. Turbine 40 is situated in turbine chamber 28 in conventional fashion, and has an output shaft 60 which provides mechanical power flow to generator 44. Turbine 40 has a wicker gate controller 41 which controls positioning of an unillustrated wicket gate mechanism included in turbine 40.

Generator power supply 62 (also known as a generator field exciter) supplies field current on lines 64 to hydraulic generator 44. In conventional manner, generator power supply 62 receives its power input on lines 66 and an exciter input signal on line 67.

As termed herein, turbine 40 and hydraulic generator 44 comprise a hydro-turbine unit 70. Moreover, in view of its operacion as explained hereinafter, asynchronous converter 50 is also known as an interface for coupling hydro-turbine unit 70 to an AC Power System such as utility or utilization system 72. In utilisation system 72, electrical power may vary and is in a predetermined utilization electrical frequency range. A utility requirements signal (carried on 73 from a control panel 74) is indicative of a power level Pₒ currently required by utilization system 72.

As shown in Fig. 1A, control system 42A includes predictive controller 76. The power order or power level signal Pₒ from control panel 74 is applied as a first input to predictive controller 76. A second input signal to predictive controller 76 is the signal hₘₑₐₛ applied from water head transducer 25. A first output of predictive controller 76 is a gate position command which is applied on line 90 co wicket gate controller 41. A second output signal ω_{g0} of predictive controller 76, indicative of the desired rotational velocity of hydro-turbine unit 70 (ωₒ being the actual rotational velocity of hydro-turbine unit 70), is applied to asynchronous converter 50 in the manner more particularly indicated hereinafter.

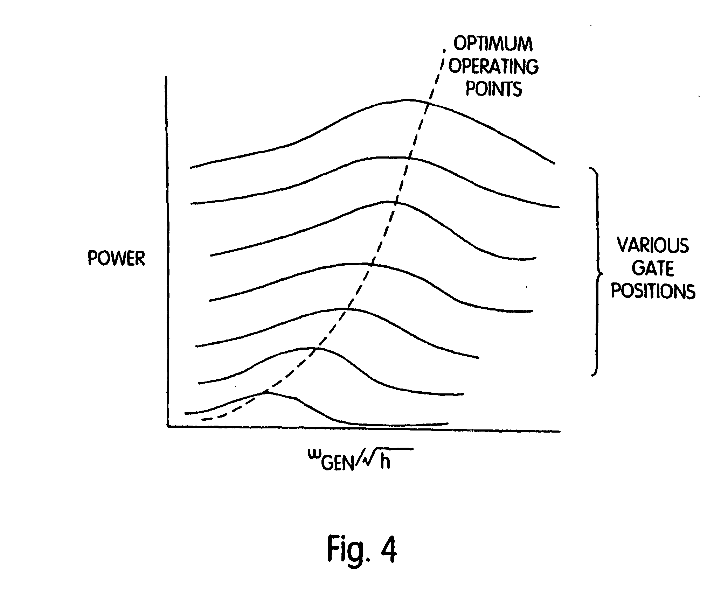

Fig. 4 shows a conventional "Hill Chart" of a type well known in the prior art and which is useful for an understanding of the function of the predictive controllers shown herein. The independent (horizontal) axis of the Hill Chart is proportional to the speed ω_{gen} of hydraulic generator 44 and inversely proportional to the square root of the water head "h" (as determined by water head transducer 25). The dependent (vertical) axis is power cut of the generator. Each trace on the plot of the Hill Chart of Fig. 4 represents a different position of the wicket gate as governed by wicket gate controller 41. For each gate position and water head measurement, there is an optimum value of speed to maximize power.

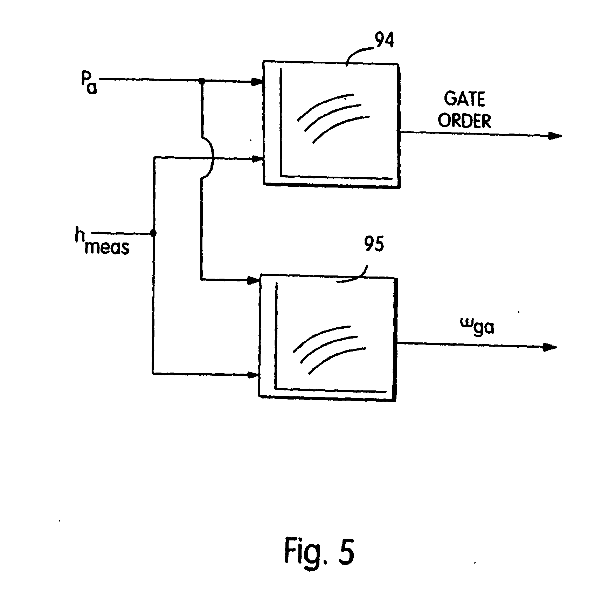

Fig. 5 illustrates functions performed by predictive controller 76. As indicated previously, predictive controller 76 receives the head water measurement signal hₘₑₐₛ from water head transducer 25 and the ordered power signal Pₒ (e.g., from panel 74). Using these two input signals, predictive controller 76 consults a first look-up table 94 to obtain a value "gate order" for use as the gate position command to apply on line 90 to wicket gate controller 41, and consults a second look-up table 95 to obtain the desired rotational velocity signal ω_{go} for application on line 92 and for use in driving asynchronous converter 50.

It will be understood by the man skilled in the art that, in one embodiment, predictive controller 76 comprises a processor wich look-up cables 94 and 95 being stored in memories such as one or more read only memories (ROMs).

The gate position command is applied on line 90 to gate wicket controller 41. The man skilled in the art understands how wicket gate controller 41 functions to control positioning of the wicket gate mechanism included in turbine 40.

The output signal ω_{go} applied on line 92 from predictive controller 76 to asynchronous converter 50 is the ordered speed of the hydraulic generator 44. In response to output signal ω_{go}, asynchronous converter 50 makes an ac voltage of the ordered frequency. Since the hydraulic generator 44 is a synchronous type machine, the speed of hydraulic generator 44 will be exactly proportional to the ac frequency of the 3-phase lines 10. Thus, setting the frequency order to asynchronous converter 50 for its connection to 3-phase lines 10 is sufficient to implement speed regulation of hydraulic generator 44 (i.e., there is no need to measure shaft speed of hydraulic generator 44 in the embodiment of Fig. 1A).

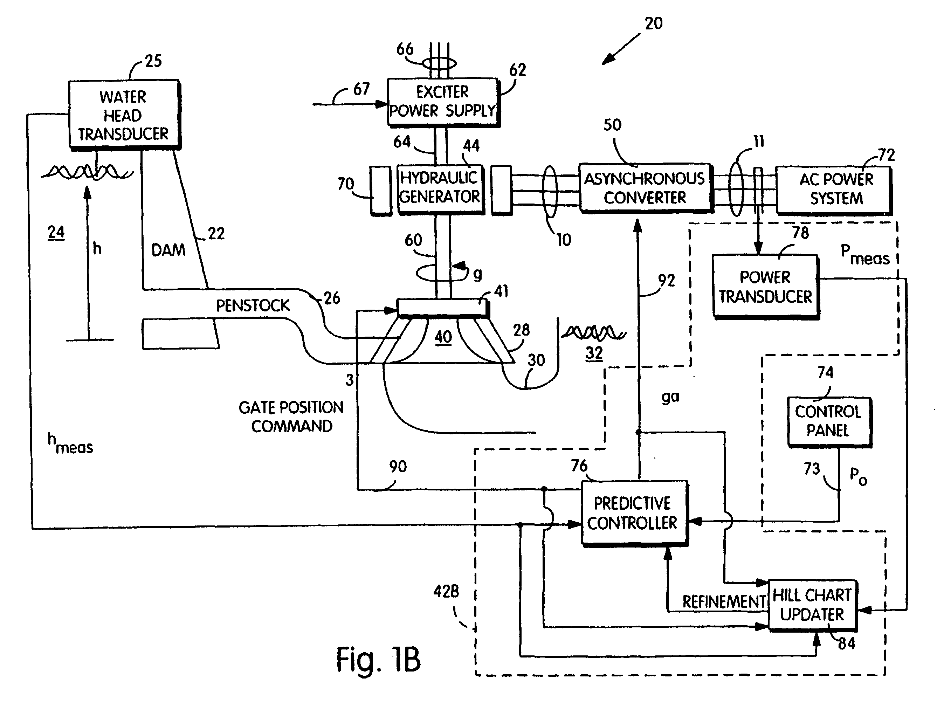

The embodiment of Fig. 1B differs from the embodiment of Fig. 1A by having control system 42B rather than control system 42A. In particular, control system 42B includes power transducer 78 and Hill Chart Updater 84 in addition to predictive controller 76. Power transducer 78 monitors power on the three-phase lines connecting asynchronous converter 50 to AC power (utility) system 72 and outputs a signal Pₘₑₐₛ to Hill Chart Updater 84.

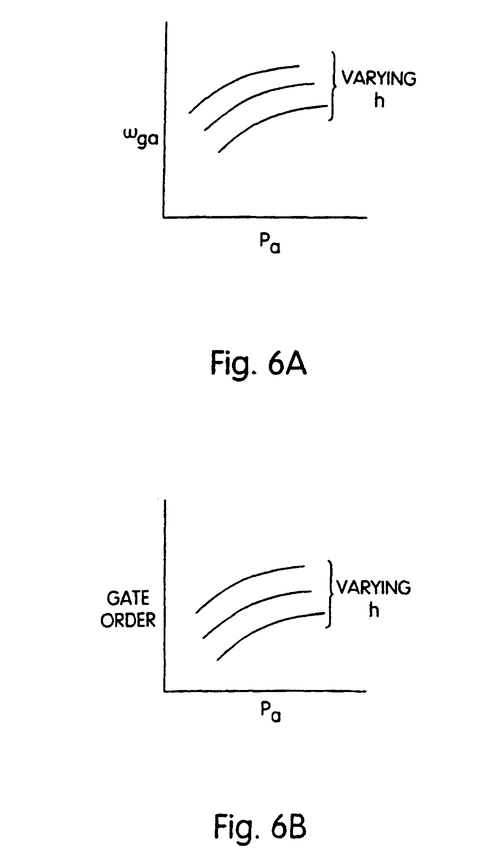

Hill Chart Updater 84 updates values stored in look-up cables 94 and 95 (see Fig. 6A and Fig. 6B) based on on-line measurements. In this regard, Hill Chart Updater 84 utilizes the measured power output of asynchronous converter 50 (signal Pₘₑₐₛ), as well as the output signals (on lines 90 and 92) from predictive controller 76 and the signal hₘₑₐₛ from water head transducer 25, to revise the Hill Chart information stored in cables 94 and 95 based on actual historical information of the hydroelectric facility.

Thus, Hill Chart updater 84 is connected to receive the measured power signal Pₘₑₐₛ from power transducer 78, as well as the gate position command outputted on line 90 from predictive controller 76, the signal outputted on line 92 from predictive controller 76, and the hₘₑₐₛ signal outputted from water head transducer 25. Hill Chart Updater 84 outputs, to predictive controller 76, updating data as indicated by a line marked "refinement".

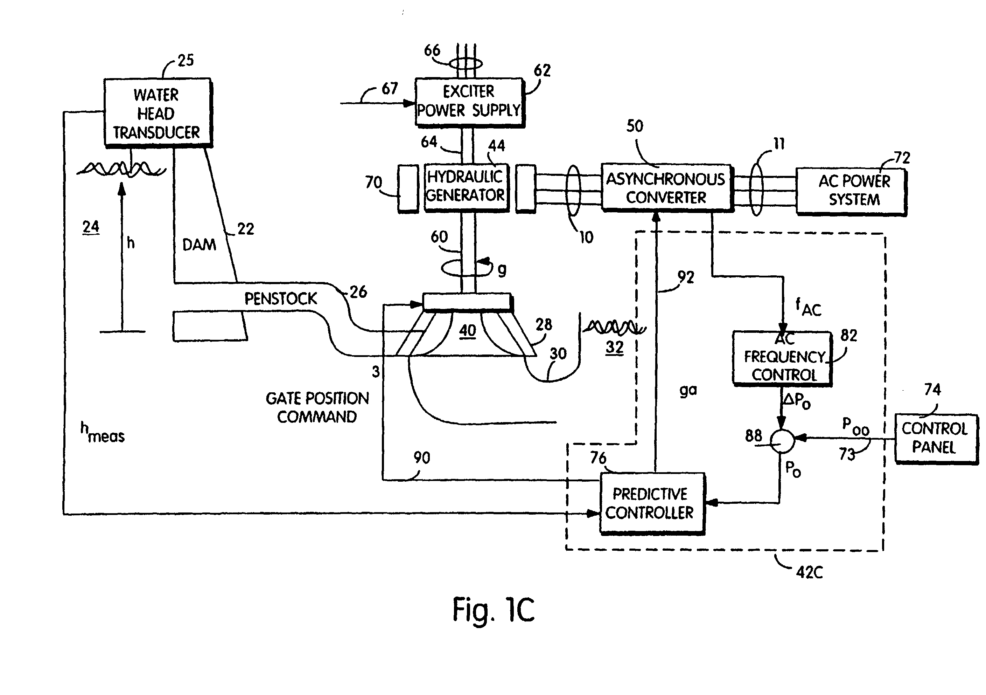

The embodiment of Fig. 1C differs from the embodiment of Fig. 1A by having control system 42C rather than control system 42A. In particular, control system 42C includes (in addition to predictive controller 76) a governor comprising an AC frequency controller 82 and adder 88.

In the embodiment of Fig. 1C, frequency controller 82 receives a signal f_{ac} from asynchronous converter 50 in the manner hereinafter described, the signal f_{ac} being indicative of ac transmission frequency on the three-phase lines connecting asynchronous converter 50 to AC power (utility) system 72. Output signal ΔPₒ from AC frequency controller 82 is applied to a first (plus) input terminal of adder 88. A second input (plus) terminal of adder 88 is connected to receive the ordered power signal (denominated as Pₒₒ in the Fig. 1C embodiment) from control panel 74. Adder 88 produces a signal Pₒ which is applied as a first input to predictive controller 76 and which, in the embodiment of Fig. 1C, serves as the value Pₒ in Fig. 5 and Fig. 6A and Fig. 6B.

As in the previous embodiments, the second input signal to predictive controller 76 of Fig. 1C is the signal hₘₑₐₛ applied from water head transducer 25. A first output of predictive controller 76 is a gace position command which is applied on line 90 to wicket gate controller 41. A second output of predictive controller 76 of Fig. 1C (i.e., signal ω_{go}) is applied on line 92 to asynchronous converter 50.

It should be understood that the features of the embodiment of Fig. 1B and Fig. 1C are combinable in a further embodiment, thereby including both Hill Chart update and ac frequency control in a single embodiment.

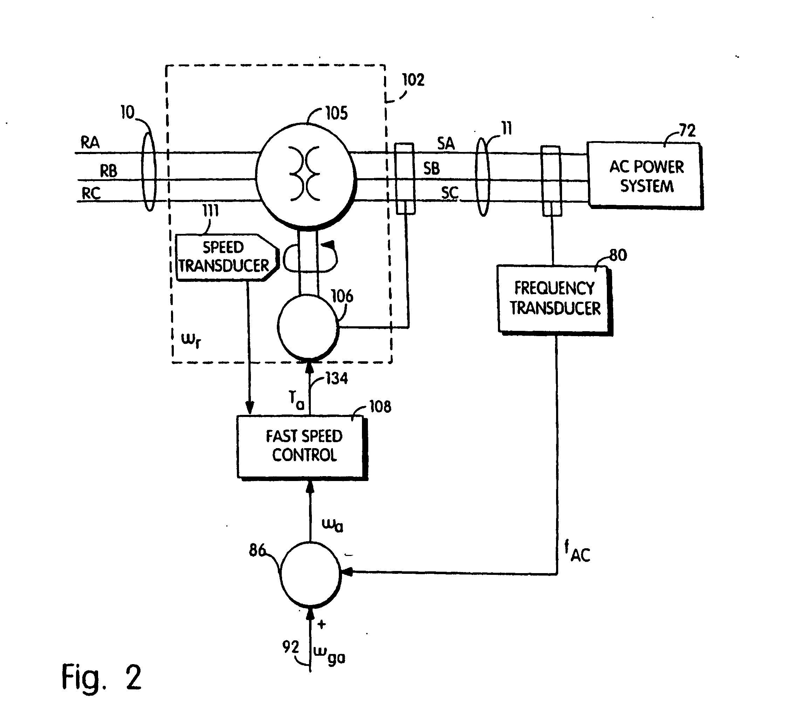

Fig. 2 shows asynchronous converter 50 as including a variable frequency transformer 102 and a control system. The control system includes a fast speed control unit 108; a frequency transducer 80; and an adder 86. As described in more detail below with reference to Fig. 3, variable frequency transformer 102 is connected by 3-phase lines RA, RB, RC to hydraulic generator 44 and by 3-phase lines SA, SB, and SC to utility system 72. These correspond to 3-phase lines denoted as 10 and 11, respectively, in Fig. 1A, 1B, and 1C.

As shown in Fig. 2, variable frequency rotary transformer 102 includes both a rotary transformer assembly 105 and a torque control unit 106 (also known as the rotor drive section). Details of rotary transformer assembly 105 and torque control unit 106 are below described in more detail.

Frequency transducer 80 monitors ac frequency on the three-phase lines 11 connecting asynchronous converter 50 to AC power (utility) system 72 and outputs the signal f_{ac} to a negative input terminal of adder 86 (and to AC frequency controller 82 in the embodiment of Fig. 1C). Adder 86 receives the requested rotational velocity signal for hydraulic machine 44 (signal ω_{go} on line 92) and outputs signal ωₒ to fast speed controller 108. An output signal ωₒ of adder 86, i.e., ωₒ = ω_{go} - f_{ac} is indicative of the desired rotational velocity of asynchronous converter 50 and accordingly is applied to asynchronous converter 50.

As also shown in Fig. 2, fast speed control unit 108 turn receives a signal ωₒ from speed transducer 111. Fast speed control unit 108 receives the signal ωₒ (from predictive controller 76 via adder 86) and outputs a drive signal Tₒ to torque control unit 106.

Rotary transformer assembly 105 includes both a rotor subassembly and a stator. The rotor subassembly includes collector rings (also known as slip rings) and rotor cage section. Three-phase lines RA, RB, RC leading from hydraulic generator 44 are connected to the collector rings; three-phase lines SA, SB, and SC leading to utility system 72 are connected to the stator. The rotor subassembly has speed transducer 111 mounted proximate thereto for generating the angular velocity signal ωᵣ indicative of the angular velocity of the rotor.

As understood by the man skilled in the art, in the illustrative embodiment rotary transformer assembly 105 is wound with a two-layer winding with sixty degree phase belts.

It should be understood that the invention is not limited to a sixty degree phase belt-wound system, rather the principles of the invention are applicable for rotary transformer assemblies of phase two and greater.

The rotor assembly is rotatable about its axis in both clockwise direction and counter-clockwise direction. Rotation of the rotor assembly is effected by rotor drive section 106.

Rotor drive section 106 is shown symbolically in Fig. 2 as a cylindrical section mounted on rotor assembly 110. Thus, rotor drive section 106 of Fig. 2 generally depicts various alternative and different types of drive mechanisms for causing rotation of rotor assembly 110. In some embodiments, rotor drive section 106 includes an actuator and some type of linkage (e.g., gearing and/or coupling) which interfaces with rotor assembly 110. For example, in one embodiment rotor drive section 106 comprises a worm gear drive arrangement. In other embodiments, rotor drive section 106 comprises an actuator such as a stepper motor acting through a radial (e.g. spur) gear, a direct drive arrangement, a hydraulic actuator turning a gear on rotor assembly 110, or a pneumatic actuator turning a gear on rotor assembly 110. In yet other embodiments, the function of the torque control unit is accomplished by providing two sets of windings on both the rotor and the stator of the rotary transformer assembly 105, a first set of windings on the rotor and stator having a different number of poles (e.g., 2 poles) than a second set of windings on the rotor and stator (e.g., 4 or more poles).

In operation, an operator sets the power order input signal (signal Pₒ in the embodiments of Fig. 1A and Fig. 1B; signal Pₒₒ in the embodiment of Fig. 1C) in accordance with a predetermined power requirement of utility system 72. Setting power order input signal (Pₒ, or Pₒₒ, as the case may be) can be accomplished by adjusting a knob or inputting data at the operator control panel or operator workstation 74 to generate the signal indicative of the ordered power.

Fast speed controller 108 receives both the requested or desired angular velocity signal ωₒ and a measured angular velocity signal ωᵣ. The requested angular velocity signal ωₒ is generated by predictive controller 76 using its Hill Chart-based information. The measured angular velocity signal ωᵣ is obtained from speed transducer 111. Fast speed controller 108 generates a drive signal (also known as the torque order signal Tₒ) on line 134 so that ωᵣ promptly equals ωₒ. The man skilled in the art knows how to operate conventional motor drivers as fast speed controller 108 to use signals ωᵣ and ωₒ to generate the drive signal Tₒ.

Thus, fast speed controller 108 operates to adjust the drive signal Tₒ on line 134 to torque control unit 106 such that the actual speed ωᵣ of rotor assembly 110 follows the ordered speed ωₒ. The closed-loop bandwidth of fast speed controller 108 should exceed the highest natural oscillatory frequency of the rotor assembly, including its reaction to the transmission network into which it is integrated, and is generally less than 100 rad/sec. Typically, the natural modes of oscillation will range from about 3 rad/sec through 50 rad/sec, and are usually less than 30 rad/sec. In connection with the bandwidth (speed of response) of fast speed controller 108, in the illustrated embodiment, a phase lag from a change in ordered speed ωₒ to actual speed ωᵣ of the rotor assembly is less than 90 degrees for sinusoidal disturbances. Ensuring this bandwidth of response will in turn ensure that all such natural modes of oscillation will experience beneficial damping from the control system.

The magnitude of the drive signal Tₒ on line 134 is used by rotor drive section 106 to increase or decrease the speed of rotor assembly 110 in order to achieve the desired speed of hydro machine 44.

Drive signal Tₒ on line 134 is applied to a torque control amplifier. Power is supplied to the torque control amplifier by a torque control power source, whereby using drive signal Tₒ on line 134 the torque control amplifier outputs three phase signals to torque control unit 106.

The angular posicioning θᵣ of the rotor assembly 110 relative to the stator 112 is also shown in Fig. 3, it being understood from conventional practice that θᵣ is zero when RA+ lines up exactly with SA+.

The real-time automatic governor for asynchronous converter 50, accomplished by Ac frequency controller 82 and adder 88, provides an automatic adjustment of order power input signal Pₒₒ depending upon actual real-time requirements of AC Power System 72. For example, if AC Power System 72 were, at any moment, not receiving enough power despite the order power signal Pₒₒ, the frequency on lines 11 would decrease and such decrease would be sensed by frequency transducer 80 and compensated for by predictive controller 76 in response to signal Pₒ so that a greater power level than that evoked by signal Pₒₒ would result. Conversely, if too much power were being supplied to AC Power System 72, the frequency on lines 11 would increase and such increase would be sensed by frequency transducer 80 and compensated for by predictive controller 76, so that a lesser power level than that evoked by signal Pₒₒ would result.

In the embodiment of Fig. 1C, the signal Pₒ to predictive controller 76 is indicative of the requested power level, rather than the order power signal Pₒₒ (Pₒ being a modification of Pₒₒ as explained above).

Thus, the present invention accomplishes variable speed with the conventional direct-current field winding on the main generator 44, varying the frequency of the ac current flowing in the stator of the main generator deviating from the nominal frequency of the AC power system 72 by an amount needed to achieve the desired speed variation (e.g., 55 Hz would yield a 110% speed on a generator nominally operated at 50 Hz). Moreover, the present invention achieves its objective of optimum hydraulic efficiency by measurement of water head and at transmission system frequency only, with an open-loop control function based upon a "Hydraulic Hill chart" computed off line.

As another advantage, power-system frequency is controlled by measuring ac transmission system frequency and adjusting the power order to the main control function. Damping of power system oscillations is also provided via the fast speed controller 108.

Converter 50 thus can easily be used to retrofit existing hydrogenerator facilities. Limits of speed adjustability of each hydrogenerator facility will depend on mechanical stresses and the ability of other system components to perform their functions. At least one generator in any given dam complex can be equipped with converter 50, or just selected dam sites along a river requiring extra control capability.

Moreover, converter 50 provides a significant tool for power authorities who manage water resources. By uncoupling flow rate (through the turbine) with power demand, water levels can be adjusted accurately without wasting energy. Such accurate adjustment includes the ability to adjust for flood and/or drought conditions in different regions of the same river.

Converter 50 also addresses the issue of pumped storage control. Pumped storage hydroelectric typically involves a two reservoir system, one reservoir being at a higher elevation and another reservoir being at a lower elevation. Water is pumped to the higher reservoir, storing its potential energy until utilities encounter extraordinary peak demand conditions. The water is then released through hydroturbines to meet this peak demand. Severe drainage of the upper reservoir as occurs at peak demand requires pumping (at an off-peak time) of water back from the lower reservoir to the higher reservoir. During low reservoir conditions, converter 50 provides the advantage of fast response and reduced operating speed. By running slightly slower and using a smaller reserve margin, power authorities can optimize water conservation while maintaining a load response rate equal to their water gating rate.

Benefits of the present invention include lower environmental stress (saving fish, minimizing erosion, etc.) and superior water level control, particularly in multi-basin systems. This control improves usefulness of water supply both for recreational and agricultural aspects, such as irrigation.

## Claims

1. A method of transmitting electrical power from a hydro-turbine unit (70) to an electrical utilisation system (72), the method comprising:
obtaining a signal(hₘₑₐₛ) indicative of water head (24); comprising
using the signal indicative of water head to control speed and gate position of a variable speed hydro-turbine unit (70) to yield a requested power level (Pₒ,Pₒₒ) to the electrical utilisation system, **characterised by**
controlling rotor speed of an asynchronous rotary converter (50) connected between the hydro-turbine unit and the electrical utilisation system (72), in response to the signal indicative of water head.

2. The method of claim 1, wherein controlling the speed of the variably speed hydro-turbine unit (70) involves using the signal indicative of water head (24) to access a memory wherein Hydraulic Hill Chart information is stored.

3. The method of claim 2, further comprising updating the memory wherein the Hydraulic Hill Chart information is stored.

4. The method of claim 1, further comprising:
obtaining a signal(f_{ac}) indicative of ac transmission frequency to the electrical utilisation system (72); and
also using the signal indicative of ac transmission frequency to the electrical utilisation system (72) to control an output power level of the variable speed hydro-turbine unit (70).

5. An interface (50) for coupling a hydro-turbine unit (70) to an electrical utility (72), the hydro-turbine (76) having a hydraulic generator (44) for generating hydro-turbine output electrical power which is transmitted via the interface to the electrical utility (72), the interface being **characterised by**:
a rotary converter (102) to be coupled to the hydro-turbine unit (70) for receiving the hydro-turbine output electrical power generated by the hydro-turbine unit (70) and through which the hydro-turbine output electrical power is applied to the electrical utility (72); and
a controller (108,80,86) which operates the rotary converter so that a requested output electrical power level (Pₒ,Pₒₒ)is obtained from the hydro-turbine unit for the electrical utility, the controller (108,80,86) using a signal (hₘₑₐₛ) indicative of water head (24) to control speed and gate position of the hydro-turbine unit (70) to yield the requested output electrical power level to the electrical utility (72).

6. The interface of claim 5, wherein the rotary converter (102) is coupled to the hydro- turbine such that ac frequency of the rotary converter (102) is proportional to rotational velocity of the hydro-turbine unit (70).

7. The interface of claim 5 or 6, wherein the controller includes a processor (76) which uses the signal(hₘₑₐₛ) indicative of water head (24) to access a memory (94,95) wherein Hydraulic Hill Chart information is stored.

8. The interface of claim 7, further comprising a Hill Chart updater (84) to update values stored in the memory (94,95) wherein Hydraulic Hill Chart information is stored.

9. The interface of claim 5, wherein the controller also uses a signal (f_{ac}) indicative of ac transmission frequency to the electrical utility (72) to control the output power of the rotary converter (102) for yielding the requested output electrical power level to the electrical utility (72).

10. The interface of claim 5, wherein the rotary converter (102) comprises:
one of a rotor and a stator connected to receive the hydro-turbine output electrical power;
the other of the rotor and the stator being connected so that the converter output electrical power is extracted therefrom;
an actuator (106) for rotating the rotor; and
wherein the controller is responsive to the signal (hₘₑₐₛ) indicative of water head (24) for controlling the actuator (106) whereby the rotor is bi-directionally rotated at a variable speed.

11. An interface (50) for coupling a hydro-turbine unit (70) to an electrical. utility (72), the hydro-turbine unit having a hydraulic generator (44) for generating hydro-turbine output electrical power which is transmitted via the interface to the electrical utility (72) , the interface being **characterised by**:
a rotary converter (102) to be coupled to the hydro-turbine unit (72) and which transmits electrical power to the electrical utility (70), the rotary converter (102) comprising:
a rotor and a stator, one of the rotor and the stator being coupled to the hydro-turbine unit (70) and the other of the rotor and stator being coupled to the electrical utility (72); and
a controller (108,80,86) which uses ac frequency of the output electrical power for generating a signal for controlling rotational speed of the rotor relative to the stator, the controller comprising:
a frequency transducer (80) which monitors ac frequency of the electrical utility (72) and generates a signal (f_{ac}) indicative thereof; and
means (108,86) for using the signal (f_{ac}) generated by the frequency transducer to modify a signal (T_{go}) indicative of a request rotational velocity of the hydro-turbine unit (70), the signal modifying means outputting a modified signal (Tₒ) for use in controlling rotational speed of the rotor relative to the stator.

## Patentansprüche

1. Verfahren zum Übertragen elektrischer Energie von einer Hydro-Turbineneinheit (70) zu einem elektrischen Verbrauchersystem (72), wobei das Verfahren enthält:
Erhalten eines Signals (hₘₑₛₛ), das die Wassersäule (24) angibt, enthaltend
Verwenden des die Wassersäule angebende Signals zum Regeln der Drehzahl und der Gatterstellung einer drehzahlvariablen Hydro-Turbineneinheit (70), um eine Soll-Leistung (P₀,P₀₀) an das elektrische Verbrauchersystem zu liefern,
**gekennzeichnet durch** Regeln der Drehzahl eines asynchronen Drehwandlers (50), der zwischen die Hydro-Turbineneinheit (70) und das elektrische Verbrauchersystem (72) geschaltet ist, als Antwort auf das die Wassersäule angebenden Signals.

2. Verfahren nach Anspruch 1, wobei das Regeln der Drehzahl der drehzahlvariablen Hydro-Turbineneinheit (70) beinhaltet, dass das die Wassersäule angebende Signal verwendet wird, um Zugang zu einem Speicher zu nehmen, in dem Hydraulische Hill Chart Information gespeichert wird.

3. Verfahren nach Anspruch 2, wobei der Speicher aktualisiert wird, in dem Hydraulische Hill Chart Information gespeichert wird.

4. Verfahren nach Anspruch 1, ferner enthaltend:
Erhalten eines Signals (f_{ac}), das die ac Übertragungsfrequenz zum elektrischen Verbrauchersystem (72) angibt, und
Verwenden auch des die Übertragungsfrequenz zum elektrischen Verbrauchersystem (72) angebenden Signals zum Regeln der Ausgangsleistung der drehzahlvariablen Hydro-Turbineneinheit (70).

5. Interface (50) zum Verbinden einer Hydro-Turbineneinheit (70) mit einem elektrischen Verbraucher (72), wobei die Hydro-Turbine (76) einen hydraulischen Generator (44) aufweist zum Erzeugen elektrischer Ausgangsleistung der Hydro-Turbine, die über das Interface zu dem elektrischen Verbraucher (72) übertragen wird, wobei das Interface **gekennzeichnet ist durch**:
einen Drehwandler (102), der mit der Hydro-Turbineneinheit (70) zu verbinden ist, zum Empfangen der elektrischen Ausgangsleistung der Hydro-Turbine, die von der Hydro-Turbineneinheit (70) erzeugt wird und **durch** die die elektrische Ausgangsleistung der Hydro-Turbine dem elektrischen Verbraucher (72) zugeführt wird, und
einen Regler (108,80,86), der den Drehwandler derart betätigt, dass eine Soll-Ausgangsleistung (P₀,P₀₀) von der Hydro-Turbineneinheit für den elektrischen Verbraucher erhalten wird, wobei der Regler (108,80,86) ein die Wassersäule (24) angebendes Signal (hₘₑₛₛ) verwendet, um Drehzahl und Gatterstellung der Hydro-Turbineneinheit (72) zu regeln, um die elektrische Soll-Ausgangsleistung für den elektrischen Verbraucher (72) zu erzielen.

6. Interface nach Anspruch 5, wobei der Drehwandler (102) mit der Hydro-Turbineneinheit derart verbunden ist, dass die ac Frequenz des Drehwandlers (102) proportional zur Drehgeschwindigkeit der Hydro-Turbineneinheit (70) ist.

7. Interface nach Anspruch 5 oder 6, wobei der Regler einen Prozessor (76) aufweist, der das die Wassersäule (24) angebende Signal (hₘₑₛₛ) verwendet, um auf einen Speicher (94,95) zuzugreifen, in dem Hydraulische Hill Chart Information gespeichert ist.

8. Interface nach Anspruch 7, wobei ferner ein Hill Chart Aktualisierer (84) vorgesehen ist, um in dem Speicher (94,95) gespeicherte Werte zu aktualisieren, in dem Hydraulische Hill Chart Information gespeichert ist.

9. Interface nach Anspruch 5, wobei der Regler auch ein Signal (f_{ac}) verwendet, das eine ac Übertagungsfrequenz zum elektrischen Verbraucher (72) angibt, um die Ausgangsleistung zum Drehwandler (102) zu regeln, um die elektrische Soll-Ausgangsleistung für den elektrischen Verbraucher (72) zu erzielen.

10. Interface nach Anspruch 5, wobei der Drehwandler (102) enthält:
einen Rotor oder Stator, der zum Empfangen der elektrischen Ausgangsleistung der Hydro-Turbine verbunden ist,
wobei der andere von dem Rotor oder Stator derart verbunden ist, dass die elektrische Ausgangsleistung des Wandlers von diesem abgezogen wird,
ein Stellglied (106) zum Drehen des Rotors und
wobei der Regler auf das Signal (hₘₑₛₛ) anspricht, das die Wassersäule (24) angibt, zum Steuern des Stellgliedes (106), wodurch der Rotor bei einer veränderlichen Drehzahl bidirektional drehbar ist.

11. Interface (50) zum Verbinden einer Hydro-Turbineneinheit (70) mit einem elektrischen Verbraucher (72), wobei die Hydro-Turbine einen hydraulischen Generator (44) aufweist zum Erzeugen elektrischer Ausgangsleistung der Hydro-Turbine, die über das Interface zum elektrischen Verbraucher (72) übertragen wird, wobei das Inerface **gekennzeichnet ist durch**:
einen Drehwandler (102), der mit der Hydro-Turbineneinheit (72) zu verbinden ist und der elektrische Leistung an den elektrischen Verbraucher (70) überträgt, wobei der Drehwandler (102) enthält:
einen Rotor und einen Stator, wobei einer von dem Rotor und Stator mit der Hydro-Turbineneinheit (70) und der andere von dem Rotor und Stator mit dem elektrischen Verbraucher (72) zu verbinden ist, und
einen Regler (108,80,86), der die ac Frequenz der elektrischen Ausgangsleistung verwendet zum Erzeugen eines Signals zum Regeln der Drehgeschwindigkeit des Rotors relativ zum Stator, wobei der Regler enthält:
einen Frequenzwandler (80), der die ac Frequenz der elektrischen Verbrauchers (72) überwacht und ein Signal (f_{ac}) erzeugt, das diese angibt, und
eine Einrichtung (108,86) zum Verwenden des von dem Frequenzwandler erzeugten Signals (f_{ac}), um ein Signal (T_{go}) zu modifizieren, das eine Soll-Drehgeschwindigkeit der Hydro-Turbineneinheit (70) angibt, wobei die das Signal modifizierende Einrichtung ein modifiziertes Signal (T₀) abgibt zur Verwendung beim Regeln der Drehgeschwindigkeit des Rotors relativ zum Stator.

## Revendications

1. Procédé pour transmettre de l'énergie électrique venant d'une unité de turbine hydraulique (70) à un système d'utilisation électrique (72), le procédé comprenant :
l'obtention d'un signal (hₘₑₐₛ) indicatif de la hauteur de colonne d'eau (24) ; comprenant :
l'utilisation du signal indicatif de la hauteur de colonne d'eau pour commander la vitesse et la position de vanne d'une unité de turbine hydraulique à vitesse variable (70) pour produire un niveau de puissance requis (P₀, P_{∞}) pour le système d'utilisation électrique, **caractérisé par** :
la commande de la vitesse de rotor d'un convertisseur rotatif asynchrone (50) connecté entre l'unité de turbine hydraulique et le système d'utilisation électrique (72) en réponse au signal indicatif de la hauteur de colonne d'eau.

2. Procédé selon la revendication 1, dans lequel la commande de la vitesse de l'unité de turbine hydraulique à vitesse variable (70) comprend l'utilisation du signal indicatif de la hauteur de colonne d'eau (24) pour accéder à une mémoire dans laquelle une information de graphique hydraulique de Hill est mémorisée.

3. Procédé selon la revendication 2, comprenant de plus la remise à jour de la mémoire dans laquelle est mémorisée l'information de graphique hydraulique de Hill.

4. Procédé selon la revendication 1, comprenant de plus :
l'obtention d'un signal (f_{ac}) indicatif d'une fréquence de transmission en courant alternatif vers le système d'utilisation électrique (72) ; et
l'utilisation, également, du signal indicatif de la fréquence de transmission en courant alternatif vers le système d'utilisation électrique (72) pour commander un niveau de puissance de sortie de l'unité de turbine hydraulique à vitesse variable (70).

5. Interface (50) pour coupler une unité de turbine hydraulique (70) avec une installation électrique (72), la turbine hydraulique (70) comportant un générateur hydraulique (44) pour générer une énergie électrique de sortie de turbine hydraulique qui est transmise par l'interface à l'installation électrique (72), l'interface étant **caractérisée par** :
un convertisseur rotatif (102) destiné à être couplé à l'unité de turbine hydraulique (70) pour recevoir l'énergie électrique de sortie de turbine hydraulique générée par l'unité de turbine hydraulique (70) et par l'intermédiaire duquel l'énergie électrique de sortie de turbine hydraulique est appliquée à l'installation électrique (72) ; et
un dispositif de commande (108, 80, 86) qui actionne le convertisseur rotatif de telle sorte qu'un niveau de puissance électrique de sortie requis (P₀, P_{∞}) soit obtenu à partir de l'unité de turbine hydraulique pour l'installation électrique, le dispositif de commande (108, 80, 86) utilisant un signal (hₘₑₐₛ) indicatif de la hauteur de colonne d'eau (24) pour commander la vitesse et la position de vanne de l'unité de turbine hydraulique (70) pour produire le niveau de puissance électrique de sortie requis pour l'installation électrique (72).

6. Interface selon la revendication 5, dans laquelle le convertisseur rotatif (102) est couplé à la turbine hydraulique de telle sorte que la fréquence en courant alternatif du convertisseur rotatif (102) soit proportionnelle à la vitesse de rotation de l'unité de turbine hydraulique (70).

7. Interface selon la revendication 5 ou 6, dans laquelle le dispositif de commande comprend un processeur (76) qui utilise le signal (hₘₑₐₛ) indicatif de la hauteur de colonne d'eau (24) pour accéder à une mémoire (94, 95) dans laquelle une information de graphique hydraulique de Hill est mémorisée.

8. Interface selon la revendication 7, comprenant de plus un dispositif de remise à jour de graphique de Hill (84) pour remettre à jour des valeurs mémorisées dans la mémoire (94, 95) dans laquelle est mémorisée une information de graphique hydraulique de Hill.

9. Interface selon la revendication 5, dans laquelle le dispositif de commande utilise également un signal (f_{ac}) indicatif d'une fréquence de transmission en courant alternatif vers l'installation électrique (72) pour commander la puissance de sortie du convertisseur rotatif (102) pour produire le niveau de puissance électrique de sortie requis vers l'installation électrique (72).

10. Interface selon la revendication 5, dans laquelle le convertisseur rotatif (102) comprend :
l'un parmi un rotor et un stator connecté de façon à recevoir l'énergie électrique de sortie de turbine hydraulique ;
l'autre parmi le rotor ou le stator qui est connecté de telle sorte que l'énergie électrique de sortie du convertisseur soit extraite de celui-ci ;
un dispositif d'actionnement (106) pour faire tourner le rotor ; et
dans laquelle le dispositif de commande répond au signal (hₘₑₐₛ) indicatif de la hauteur de colonne d'eau (24) en commandant le dispositif d'actionnement (106), grâce à quoi le rotor tourne de façon bidirectionnelle à une vitesse variable.

11. Interface (50) pour coupler une unité de turbine hydraulique (70) à une installation électrique (72), l'unité de turbine hydraulique comportant un générateur hydraulique (44) pour générer une énergie électrique de sortie de turbine hydraulique qui est transmise par l'intermédiaire de l' interface à l'installation électrique (72), l'interface étant **caractérisée par** :
un convertisseur rotatif (102) destiné à être couplé à l'unité de turbine hydraulique (70) et qui transmet une énergie électrique à l'installation électrique (72), le convertisseur rotatif (102) comprenant :
un rotor et un stator, l'un parmi le rotor et le stator étant couplé à l'unité de turbine hydraulique (70), et l'autre parmi le rotor et le stator étant couplé à l'installation électrique (72) ; et
un dispositif de commande (108, 80, 86) qui utilise la fréquence en courant alternatif de l'énergie électrique de sortie pour générer un signal pour commander la vitesse de rotation du rotor par rapport au stator, le dispositif de commande comprenant :
un transducteur de fréquence (80) qui contrôle la fréquence en courant alternatif de l'installation électrique (72) et qui génère un signal (f_{ac}) indicatif de celle-ci ; et
des moyens (108, 86) pour utiliser le signal (f_{ac}) généré par le transducteur de fréquence pour modifier un signal (T_{go}) indicatif d'une vitesse de rotation requise de l'unité de turbine hydraulique (70), les moyens de modification de signal délivrant en sortie un signal modifié (T₀) destiné à être utilisé pour commander la vitesse de rotation du rotor par rapport au stator.
